# EUROPÄISCHE PATENTSCHRIFT

(11) **EP 1 076 939 B1**
(45) Veröffentlichungstag und Bekanntmachung des Hinweises auf die Patenterteilung: **21.07.2004**
(21) Anmeldenummer: 99929080.2
(22) Anmeldetag: 03.05.1999
(51) Int. Cl.: H04B 3/54, H04L 12/28

(54) **BREITBAND-KOMMUNIKATIONSSYSTEM**
WIDE-BAND COMMUNICATION SYSTEM
SYSTEME DE COMMUNICATION A LARGE BANDE

(30) Priorität: 08.05.1998 DE 19820760
(43) Veröffentlichungstag der Anmeldung: 21.02.2001
(73) Patentinhaber: SIEMENS AKTIENGESELLSCHAFT, 80333 München (DE)
(72) Erfinder: TASTO, Manfred, D-46397 Bocholt (DE); ARETZ, Kurt, D-46419 Isselburg (DE)
(86) Internationale Anmeldenummer: PCT/DE1999/001295
(87) Internationale Veröffentlichungsnummer: WO 1999/059261

(56) Entgegenhaltungen:
- EP-A- 0 766 427
- GB-A- 2 229 022
- US-A- 4 443 786

## Beschreibung

Die Erfindung betrifft ein Breitband-Kommunikationssystem mit mehreren miteinander verbundenen Schnurlos-Kommunikationseinrichtungen (1) zur schnurlosen Kommunikation mit wenigstens einem Kommunikationsendgerät innerhalb einer Kommunikationszelle.

Anspruchsvolle Kommunikationsdienste wie die Übertragung von Videodaten, beispielsweise für die Fernsehausstrahlung, Videowiedergabe oder Bildtelefonie erfordert hohe Datenraten in der Größenordnung von 10 Megabit pro Sekunde. Für eine schnurlose Datenübertragung über kurze Entfernungen, beispielsweise im Haus- und Gartenbereich oder in Bürogebäuden oder dergleichen sind daher die heute bei Schnurlos-Telefonen (DECT) bzw. beim Mobilfunk (beispielsweise nach dem GSM-Standard) verwendeten Bandbreiten bei Trägerfrequenzen von ca. 900 MHz bis ca. 2000 MHz nicht ausreichend. Vielmehr sind höhere Frequenzen z.B. oberhalb von 10 GHz notwendig.

In der Informationsbroschüre "Innovationskolleg Kommunikationssysteme" vom Institut für Nachrichtentechnik der Technischen Universität Dresden wird vorgeschlagen, für die schnurlose digitale Breitband-Datenübertragung innerhalb von Gebäuden Funkfrequenzen im Bereich von 60 GHz zu verwenden. Bei diesen hohen Frequenzen ist jedoch generell die Durchdringung von Mauerwerk nicht möglich. Daher muß in jedem Raum, in dem eine schnurlose Kommunikation möglich sein soll, jeweils eine Funkbasisstation installiert werden.

Aus der Informationsbroschüre "Multimediakommunikation auf integrierten Netzen und Terminals" der Technischen Universität Braunschweig, Institut für Nachrichtentechnik, vom 14.08.1997, wird vorgeschlagen, das Stromversorgungsnetz zur Datenübertragung innerhalb von Gebäuden zu nutzen.

Aus der GB-A-2 229 022 ist ein System bekannt, bei dem an einen Stromleiter über Datenendgeräte angeschlossene Elektrogeräte über eine ebenfalls an dem Stromleiter angeschlossene Steuereinheit oder eine Infrarotfernbedienung durch übertragene Steuerdatenpakete ferngesteuert werden können, wobei die Steuerdatenpakete bei einer Übertragungsrate von maximal 9600 Bit/s eine Größe bis zu 43 Byte aufweisen können. Die Datenendgeräte sind dazu derart ausgestaltet, dass sie die Steuerdatenpakete entweder von der Steuereinheit über das Stromnetz oder über elektromagnetische Wellen (Infrarot) über die Infrarotfernbedienung erhalten können.

Aufgabe der vorliegenden Erfindung ist es, eine schnurlose Breitbandkommunikation innerhalb von Gebäuden und im Umfeld von Gebäuden mit einem möglichst geringen Installationsaufwand zu ermöglichen.

Gelöst wird die Aufgabe durch das in Anspruch 1 beschriebene Breitband-Kommunikationssystem mit mehreren miteinander verbundenen Schnurlos-Kommunikationseinrichtungen zur Schnurloskommunikation mit wenigstens einem Kommunikationsendgerät innerhalb einer Kommunikationszelle, wobei die Schnurlos-Kommunikationseinrichtungen an das Stromversorgungsnetz anschließbar und zur Breitband-Datenubertragung über das Stromversorgungsnetz ausgebildet sind. Weiterbildungen und vorteilhafte Ausgestaltungen des erfindungsgemäßen Kommunikationssystems sind in den Unteransprüchen beschrieben.

Da in jedem Gebaude üblicherweise Stromversorgungsleitungen vorhanden sind, erlaubt die Erfindung so eine schnurlose Breitbandkommunikation bei geringstmöglichem Installationsaufwand.

Die Schnurloskommunikation zwischen den Schnurlos-Kommunikationseinrichtungen und Kommunikationsendgeräten kann über Funk, vorteilhaft mit Frequenzen oberhalb von 10 GHz, ausgeführt werden.

Alternativ kann die schnurlose Datenübertragung zwischen Kommunikationseinrichtung oder Basisstation und jeweiligem Endgerät per Infrarotstrahlung ausgeführt werden. Dadurch wird die Beeinträchtigung von in der Kommunikationszelle vorhandenen elektrischen Bauteilen durch Funkwellen, die mit zunehmender Frequenz starker wird, vermieden. Aufgrund ihrer hohen Eigenfrequenz ermöglicht die Infrarotstrahlung eine sehr breitbandige Datenübermittlung mit bis zu mehreren 100 Megabit pro Sekunde, womit 10 Mbit/s problemlos moglich sind.

Die Datenübertragung kann mittels Amplitudenmodulation über das Infrarot-Basisband oder durch höherwertige digitale Modulationsverfahren (OFDM, CDMA) erfolgen.

Zur Datenübertragung kann Infrarotstrahlung im Wellenlängenbereich von 800 nm bis 1000 nm verwendet werden, die durch Laserdioden oder Leuchtdioden (LED) preisgünstig erzeugt werden kann. Jedoch liegt dieser Frequenzbereich nahe dem sichtbaren Bereich, so daß gewisse Intensitätsgrenzen zum Schutz der Augen nicht überschritten werden dürfen.

Eine andere Möglichkeit ist beispielsweise der Wellenlängenbereich von 1200 nm bis 1400 nm, in dem die Empfindlichkeit des Auges sehr gering ist. Preiswerte Infrarotquellen in diesem Frequenzbereich befinden sich im Entwicklungsstadium.

Die Infrarotquelle kann insbesondere ein oberflächenemittierender Halbleiterlaser (Vertical Cavity Surface Emitting Laser) sein. Als Infrarotempfänger sind Halbleiter-Infrarotdetektoren geeignet, die in dem Frequenzbereich der jeweiligen Infrarotquelle arbeiten.

Das Kommunikationssystem kann eine Steuereinrichtung (5) zur Steuerung der Kommunikation zwischen den einzelnen Kommunikationseinrichtungen oder Basisstationen aufweisen. Die Steuereinrichtung kann auch dazu dienen, einen Anschluß an ein externes Kommunikationsnetz, beispielsweise das Telefonnetz oder ein Breitband-TV-Kabelnetz mittels Koaxialkabel, Glasfaserkabel oder auch über eine Funkverbindung, eine sogenannte Wireless Local Loop, herzustellen.

Eine Kommunikationszelle kann durch einen Raum in einem Gebäude wie einem Wohnhaus, einem Bürogebäude oder einer Fabrikhalle oder durch einen Garten- oder Hofbereich im Umfeld des Gebäudes gebildet werden. Zur Datenübertragung zwischen den Schnurlos-Kommunikationseinrichtungen oder Basisstationen untereinander kann das installierte Stromversorgungsnetz, beispielsweise ein 230 Volt-Netz oder ein 110 Volt-Netz mitbenutzt werden.

Vorzugsweise sind die Schnurlos-Kommunikationseinrichtungen in eine Glühlampenfassung einschraubbar, wodurch der Installationsaufwand weiter minimiert ist. Um an der Stelle, wo die Schnurlos-Kommunikationseinrichtung angeordnet ist, trotzdem die Möglichkeit einer Raumbeleuchtung zu schaffen, kann die Schnurlos-Kommunikationseinrichtung vorzugsweise eine zusätzliche Fassung aufweisen.

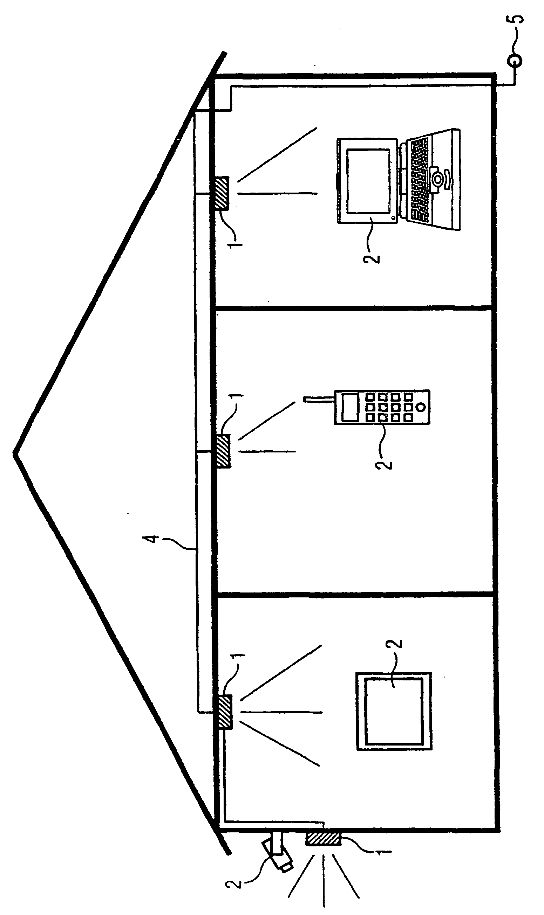

Die Erfindung wird im folgenden anhand eines bevorzugten Ausführungsbeispiels unter Bezugnahme auf die Zeichnung erläutert, in der die einzige Fig. 1 ein Ausführungsbeispiel des erfindungsgemäßen Breitband-Kommunikationssystems zeigt.

Fig. 1 zeigt beispielhaft die Anwendung der vorliegenden Erfindung auf die Kommunikation innerhalb eines Wohngebäudes. Es sei jedoch festgehalten, daß die Erfindung keinesfalls auf derartige Anwendungen beschränkt ist. Selbstverständlich können die Kommunikationszellen Räume innerhalb eines Bürogebäudes oder auch im Freien positioniert sein. Wichtig ist, daß in jeder Kommunikationszelle eine Kommunikation zwischen der Schnurlos-Kommunikationseinrichtung 1 und dem Kommunikationsendgerät 2 direkt oder indirekt, beispielsweise durch Reflexion an Wänden, möglich ist.

Die Schnurlos-Kommunikationseinrichtungen sind in der Zeichnung schematisch dargestellt und mit 1 bezeichnet. Es kann sich dabei um einen Funk-Sender/-Empfänger handeln, der bei einer Frequenz größer 10 GHz, beispielsweise bei 60 GHz, arbeitet. Vorzugsweise kann es sich bei der Schnurlos-Kommunikationseinrichtung oder der Basisstation 1 um einen Infrarot-Sender/-Empfänger handeln. In der Zeichnung sind die Basisstationen 1 an der Decke angeordnet, wobei je nach Form des Raumes und Möblierung eine andere Anordnung genauso möglich ist. Beispielhaft sind Kommunikationsendgeräte 2, wie ein Fernsehgerät bzw. ein separater TV-Bildschirm, ein Schnurlos-Telefon oder ein Schnurlos-Bildtelefon, ein Laptop-Computer oder eine Uberwachungskamera 2 dargestellt. Die Kommunikationsendgeräte 2 sind jeweils mit einer Kommunikationsschnittstelle ausgerüstet, die eine Übertragung zu der jeweiligen Basisstation 1 über Funk oder über Infrarot ermöglicht. Bewegt sich der Benutzer beispielsweise mit seinem Mobiltelefon 2 von einem Raum in einen benachbarten Raum oder geht er in den Garten, so findet ein automatisches Handover zwischen den einzelnen Kommunikationszellen statt.

Die einzelnen Schnurlos-Kommunikationseinrichtungen 1 weisen jeweils einen Netzstecker auf, über den sowohl die für den Betrieb erforderliche elektrische Leistung zugeführt wird als auch die breitbandige Datenübertragung erfolgt. Dadurch wird der zur Einrichtung des erfindungsgemäßen Kommunikationssystems erforderliche Installationsaufwand auf das "Anstecken" der Basisstation 1 in die Netzsteckdose reduziert.

Zusätzlich ist eine Steuereinrichtung oder eine Kopfstation 5 vorgesehen, die als Bus-Controller die Daten an die einzelnen Basisstationen 1 verteilt und auch das Handover steuert. Außerdem stellt die Steuereinrichtung 5 die Verbindung zu externen Kommunikationsnetzen wie dem Telefonnetz oder einem Breitband-TV-Kabelnetz her. Diese Verbindung zwischen Steuereinrichtung 5 und externem Netz kann über Kabel (Koaxialkabel, Glasfaserkabel, oder ein sogenanntes "Twisted-Pair"-Kabel) oder auch über Funk über eine sogenannte Wireless Local Loop erfolgen. Im letzeren Fall kann beispielsweise eine (nicht dargestellte) externe Richtantenne auf dem Dach des Gebäudes angeordnet sein.

Die Basisstation 1 kann so gestaltet sein, daß sie in eine Standard-Glühlampenfassung eingeschraubt werden kann. Damit wird es möglich, die Basisstation an der Zimmerdecke an Lampenfassungen zu installieren, wo eine günstige Funk- bzw. Infrarot-Ausleuchtung der Kommunikationszelle bzw. des Raumes möglich ist. In einer besonderen Ausführungsform kann die Basisstation eine zusätzliche Standard-Glühlampenfassung aufweisen, so daß die Basisstation beispielsweise in die Decken-Glühlampenfassung eingeschraubt werden kann, wobei an der Basisstation wiederum eine Glühlampe angebracht werden kann.

Das erfindungsgemäße Breitband-Kommunikationssystem ermöglicht eine breitbandige Schnurlos-Kommunikation innerhalb oder im Umfeld von Gebäuden, wobei der Installationsaufwand minimiert ist.

## Patentansprüche

1. Breitband-Kommunikationssystem, aufweisend mehrere miteinander verbundene Schnurlos-Kommunikationseinrichtungen (1) zur schnurlosen Kommunikation mit wenigstens einem Kommunikationsendgerät (2) innerhalb einer Kommunikationszelle, wobei die Schnurlos-Kommunikationseinrichtungen (1) an ein Stromversorgungsnetz anschließbar und zur Breitband-Datenübertragung über das Stromversorgungsnetz (4) ausgebildet sind.

2. Kommunikationssystem nach Anspruch 1,
**dadurch gekennzeichnet,**
**daß** die Schnurlos-Kommunikationseinrichtungen (1) zur schnurlosen Datenübertragung per Funk ausgebildet sind.

3. Kommunikationssystem nach Anspruch 1,
**dadurch gekennzeichnet,**
**daß** die Schnurlos-Kommunikationseinrichtungen (1) zur schnurlosen Datenübertragung über Infrarotstrahlung ausgebildet sind.

4. Kommunikationssystem nach Anspruch 3,
**dadurch gekennzeichnet,**
**daß** die Datenübertragung zwischen Schnurlos-Kommunikationseinrichtung (1) und Kommunikationsendgerät (2) mittels Amplitudenmodulation des Infrarot-Basisbandes erfolgt.

5. Kommunikationssystem nach Anspruch 3,
**dadurch gekennzeichnet,**
**daß** die Datenübertragung zwischen Schnurlos-Kommunikationseinrichtung (1) und Kommunikationsendgerät (2) durch höherwertige digitale Modulation erfolgt.

6. Kommunikationssystem nach einem der Ansprüche 3 bis 5,
**dadurch gekennzeichnet,**
**daß** die Infrarotstrahlung eine Wellenlänge von 800 nm bis 1000 nm hat.

7. Kommunikationssystem nach einem der Ansprüche 3 bis 5,
**dadurch gekennzeichnet,**
**daß** die Infrarotstrahlung eine Wellenlänge von 1200 nm bis 1400 nm hat.

8. Kommunikationssystem nach einem der Ansprüche 3 bis 7,
**dadurch gekennzeichnet,**
**daß** die Infrarotquelle ein oberflächenemittierender Halbleiterlaser (VCSEL) ist.

9. Kommunikationssystem nach einem der Ansprüche 1 bis 8, **gekennzeichnet durch** eine Steuereinrichtung (5) zur Steuerung der Datenkommunikation zwischen den Schnurlos-Kommunikationseinrichtungen (1).

10. Kommunikationssystem nach Anspruch 9,
**dadurch gekennzeichnet,**
**daß** die Steuereinrichtung (5) einen Anschluß an ein externes Kommunikationsnetz herstellt.

11. Kommunikationssystem nach Anspruch 10,
**dadurch gekennzeichnet,**
**daß** der Anschluß an das externe Kommunikationsnetz mittels Koaxialkabel oder Glasfaserkabel hergestellt wird.

12. Kommunikationssystem nach Anspruch 10,
**dadurch gekennzeichnet,**
**daß** der Anschluß an das externe Kommunikationsnetz über eine Funkverbindung erfolgt.

13. Kommunikationssystem nach einem der Ansprüche 1 bis 12,
**dadurch gekennzeichnet,**
**daß** die Schnurlos-Kommunikationseinrichtungen (1) zur Datenübertragung über ein 230 Volt- oder ein 110 Volt-Stromversorgungsnetz ausgebildet sind.

14. Kommunikationssystem nach einem der Ansprüche 1 bis 13,
**dadurch gekennzeichnet,**
**daß** eine Kommunikationszelle durch einen Raum in einem Gebäude gebildet wird.

15. Kommunikationssystem nach einem der Ansprüche 1 bis 14,
**dadurch gekennzeichnet,**
**daß** die Schnurlos-Kommunikationseinrichtungen (1) in eine Glühlampenfassung einschraubbar sind.

16. Kommunikationssystem nach Anspruch 15,
**dadurch gekennzeichnet,**
**daß** eine Schnurlos-Kommunikationseinrichtung eine eigene Glühlampenfassung aufweist.

## Claims

1. Broadband communication system featuring a number of interconnected cordless communication devices (1) for cordless communication with the least one communication terminal (2) within a communication cell, in which case the cordless communication device (1) can be connected to an ac power supply network and embodied for broadband data transmission over the power supply network (4).

2. Communication system according to Claim 1,
**characterized in that**,
the cordless communication devices (1) are embodied for cordless data transmission via radio.

3. Communication system according to Claim 1,
**characterized in that**,
the cordless communication devices (1) are embodied for cordless data transmission via infrared radiation.

4. Communication system according to Claim 3,
**characterized in that**,
data is transmitted between the cordless communication device (1) and communication terminals (2) using amplitude modulation of the infrared baseband.

5. Communication system according to Claim 3,
**characterized in that**,
data is transmitted between cordless communication device (1) and communication terminal (2) by higher-quality digital modulation.

6. Communication system according to one of the Claims 3 to 5,
**characterized in that**,
the Infrared radiation has a wavelength of between 8001 nm and 1000 nm.

7. Communication system according to one of the Claims 3 to 5,
**characterized in that**,
the Infrared radiation has a wavelength of between 1200 nm and 1400 nm.

8. Communication system according to one of the Claims 3 to 7,
**characterized in that**,
the infrared source is a vertical cavity surface emitting laser (VCSEL).

9. Communication system in accordance with one of the claims 1 to 8,
**characterized by** a control device (5) for controlling data communication between the cordless communication devices (1).

10. Communication system according to Claim 9,
**characterized in that**,
the control device (5) establishes a connection to an external communication network.

11. Communication system according to Claim 10,
**characterized in that**,
the connection to the external communication network is established by means of coaxial cable or glass fiber cable.

12. Communication system according to Claim 10,
**characterized in that**,
the connection to the external communication network is established via a radio link.

13. Communication system according to one of the Claims 1 to 12,
**characterized in that**,
the cordless communication devices (1) are embodied for transmission of data via a 230 Volt or a 110 Volt power supply network.

14. Communication system according to one of the Claims 1 to 13,
**characterized in that**,
a communication cell is formed by a room in a building.

15. Communication system according one of the Claims 1 to 14,
**characterized in that**,
the cordless communication devices (1) can be screwed into an incandescent light bulb holder.

16. Communication system according to Claim 15,
**characterized in that**,
a cordless communication device features its own incandescent light bulb holder.

## Revendications

1. Système de communication à large bande, comportant plusieurs dispositifs de communication sans fil (1) reliés entre eux aux fins de la communication sans fil avec au moins un terminal de communication (2) à l'intérieur d'une cellule de communication, les dispositifs de communication sans fil (1) étant connectables à un réseau d'alimentation électrique et étant réalisés aux fins de la transmission de données à large bande par l'intermédiaire du réseau d'alimentation électrique (4).

2. Système de communication selon la revendication 1,
**caractérisé en ce que**
les dispositifs de communication sans fil (1) sont réalisés aux fins de la radiotransmission de données sans fil.

3. Système de communication selon la revendication 1,
**caractérisé en ce que**
les dispositifs de communication sans fil (1) sont réalisés aux fins de la transmission de données sans fil par rayonnement infrarouge.

4. Système de communication selon la revendication 3,
**caractérisé en ce que**
la transmission de données entre le dispositif de communication sans fil (1) et le terminal de communication (2) se fait au moyen de la modulation d'amplitudes de la bande de base infrarouge.

5. Système de communication selon la revendication 3,
**caractérisé en ce que**
la transmission de données entre le dispositif de communication sans fil (1) et le terminal de communication (2) se fait par modulation numérique de qualité supérieure.

6. Système de communication selon l'une des revendications 3 à 5,
**caractérisé en ce que**
le rayonnement infrarouge a une longueur d'onde allant de 800 nm à 1000 nm.

7. Système de communication selon l'une des revendications 3 à 5,
**caractérisé en ce que**
le rayonnement infrarouge a une longueur d'onde allant de 1200 nm à 1400 nm.

8. Système de communication selon l'une des revendications 3 à 7,
**caractérisé en ce que**
la source infrarouge est un laser à semi-conducteur à émission par la surface (VCSEL).

9. Système de communication selon l'une des revendications 1 à 8,
**caractérisé par** un dispositif de commande (5) pour la commande de la communication de données entre les dispositifs de communication sans fil (1).

10. Système de communication selon la revendication 9,
**caractérisé en ce que**
le dispositif de commande (5) établit une connexion à un réseau de communication externe.

11. Système de communication selon la revendication 10,
**caractérisé en ce que**
la connexion au réseau de communication externe se fait au moyen d'un câble coaxial ou d'un câble à fibre(s) optique(s).

12. Système de communication selon la revendication 10,
**caractérisé en ce que**
la connexion au réseau de communication externe se fait par l'intermédiaire d'une liaison radio.

13. Système de communication selon l'une des revendications 1 à 12,
**caractérisé en ce que**
les dispositifs de communication sans fil (1) sont réalisés aux fins de la transmission de données par l'intermédiaire d'un réseau d'alimentation électrique de 230 volts ou de 110 volts.

14. Système de communication selon l'une des revendications 1 à 13,
**caractérisé en ce**
**qu'**une cellule de communication est constituée par une pièce dans un bâtiment

15. Système de communication selon l'une des revendications 1 à 14,
**caractérisé en ce que**
les dispositifs de communication sans fil (1) sont vissables dans une douille de lampe à incandescence.

16. Système de communication selon la revendication 15,
**caractérisé en ce**
**qu'**un dispositif de communication sans fil comporte une propre douille pour lampe à incandescence.
